# EUROPÄISCHE PATENTSCHRIFT

(11) **EP 0 994 544 B1**
(45) Veröffentlichungstag und Bekanntmachung des Hinweises auf die Patenterteilung: **04.10.2006**
(21) Anmeldenummer: 99112683.0
(22) Anmeldetag: 02.07.1999
(51) Int. Cl.: H02G 3/08, B25F 5/00

(54) **Gehäuseteil mit Aufnahme für eine Kabeltülle**
Housing part with mounting means for a cable-sleeve
Partie de boîtier avec logement pour manchon de câble

(30) Priorität: 15.10.1998 DE 19847456
(43) Veröffentlichungstag der Anmeldung: 19.04.2000
(73) Patentinhaber: ROBERT BOSCH GMBH, 70442 Stuttgart (DE)
(72) Erfinder: Eicher, Bernhard, 70794 Filderstadt (DE)

(56) Entgegenhaltungen:
- DE-A- 4 344 635
- US-A- 2 662 110

## Beschreibung

### Stand der Technik

Die Erfindung geht aus von einem Gehäuseteil mit Aufnahme für eine Kabeltülle der im Oberbegriff des Anspruchs 1 definierten Gattung.

Ein Gehäuseteil dieser Art ist in US 2 662 110 beschrieben.

Es ist ein weiterer Gehäuseteil bekannt, der in Schalenbauweise aus zwei sich ergänzenden Schalen, in der Regel Halbschalen, zusammengesetzt ist, wobei jede Halbschale einen Wandteil mit zugeordneter Ausnehmung enthält. Bei der Montage wird die Kabeltülle mit ihrem mittleren Abschnitt, der sich zwischen den beidseitigen Abstützabschnitten befindet, in die Ausnehmung eines Wandteils eingelegt, so daß dann beim Zusammensetzen beider Schalen, insbesondere Halbschalen, die Kabeltülle mit diesem Abschnitt lagesicher zwischen beiden Halbschalen aufgenommen und gehalten ist. Die beidseitigen Abstützabschnitte der Kabeltülle ermöglichen deren Abstützung am Gehäuseteil. Aufgrund dieser Aufnahme und Abstützung ist Kabelbrüchen bei der hindurchgeführten elektrischen Anschlußleitung so weit wie möglich entgegengewirkt. Ferner kann ein kostengünstiges Kabel für diese Anschlußleitung verwendet werden. Diese Art der Aufnahme und Lagesicherung der Kabeltülle ist jedoch auf Gehäuseteile in Schalenbauweise beschränkt.

Bei Gehäusen in Topfbauweise lassen sich Kabeltüllen dieser Art nicht einsetzen. Statt dessen sind schlauchförmige Kabeltüllen verwendbar, die endseitig einen etwa ringförmigen Abstützabschnitt aufweisen und die bei der Montage von innen her in das Gehäuse in Topfbauweise eingesetzt werden derart, daß der Kabeltüllenschlauch von innen her durch eine Bohrung im Gehäuse hindurchgesteckt wird, bis der endseitige ringförmige Abstützabschnitt als Axialanschlag von innen her am Gehäuse anschlägt. Eine äußere Abstützung der Kabeltülle mittels eines dortigen zweiten Abstützabschnittes ist hierbei nicht möglich. Ferner bedarf es eines elektrischen Anschlußkabels, das kostenaufwendiger ist, wobei in höherem Maße die Gefahr von Kabelbrüchen besteht.

### Vorteile der Erfindung

Der erfindungsgemäße Gehäuseteil mit Aufnahme für eine Kabeltülle mit den kennzeichnenden Merkmalen des Anspruchs 1 hat demgegenüber den Vorteil, daß der Gehäuseteil in Topfbauweise gestaltet werden kann und gleichwohl im Zusammenhang damit Kabeltüllen, die aufgrund ihrer geometrischen Form bisher nur für Gehäuseteile in Schalenbauweise verwendet werden konnten, mit allen damit verbundenen Vorteilen eingesetzt werden können. Ein Gehäuseteil in Topfbauweise ist in aller Regel kostengünstiger herstellbar und einfacher montierbar, so daß dieser Vorteil genutzt werden kann. Durch die hierbei ermöglichte Halterung solcher Kabeltüllen mit beidseitigen Astützabschnitten und mittlerem, in Querrichtung kleinerem Abschnitt kann ein kostengünstigeres elektrisches Anschlußkabel verwendet werden, wobei ferner die Gefahr etwaiger Kabelbrüche durch die innere und äußere Abstützung der Kabeltülle reduziert ist.

Durch die in den weiteren Ansprüchen aufgeführten Maßnahmen sind vorteilhafte Weiterbildungen und Verbesserungen des im Anspruch 1 angegebenen Gehäuseteils möglich.

Durch die Merkmale im Anspruch 10 ist erreicht, daß durch Wahl des jeweiligen Anlegdeckels verschiedenen Varianten von Gehäuseteilen und mittels diesen abgedeckten Baureihen in einfacher Weise Rechnung getragen werden kann. In beiden Fällen wird immer der gleiche Gehäusedeckel verwendet und je nach Variante entweder der Anlegdeckel mit Blinddeckel oder die andere Ausführungsform des Anlegdeckels ohne Blinddeckel verwendet.

### Zeichnung

Die Erfindung ist anhand eines in den Zeichnungen dargestellten Ausführungsbeispieles im folgenden näher beschrieben. Es zeigen:
- Fig. 1: einen schematischen senkrechten Schnitt eines Gehäuseteils mit darin aufgenommener Kabeltülle, gemäß einem ersten Ausführungsbeispiel,
- Fig. 2: einen schematischen senkrechten Schnitt entsprechend demjenigen in Fig. 1 eines zweiten Ausführungsbeispieles,
- Fig. 3: einen schematischen Schnitt entlang der Linie III-III in Fig. 1,
- Fig. 4: einen schematischen senkrechten Schnitt eines Gehäuseteils, einer Kabeltülle und zweier verschiedener Anlegdeckel entsprechend dem ersten bzw. zweiten Ausführungsbeispiel, jedoch vor dem Zusammenbau.

### Beschreibung des Ausführungsbeispiels

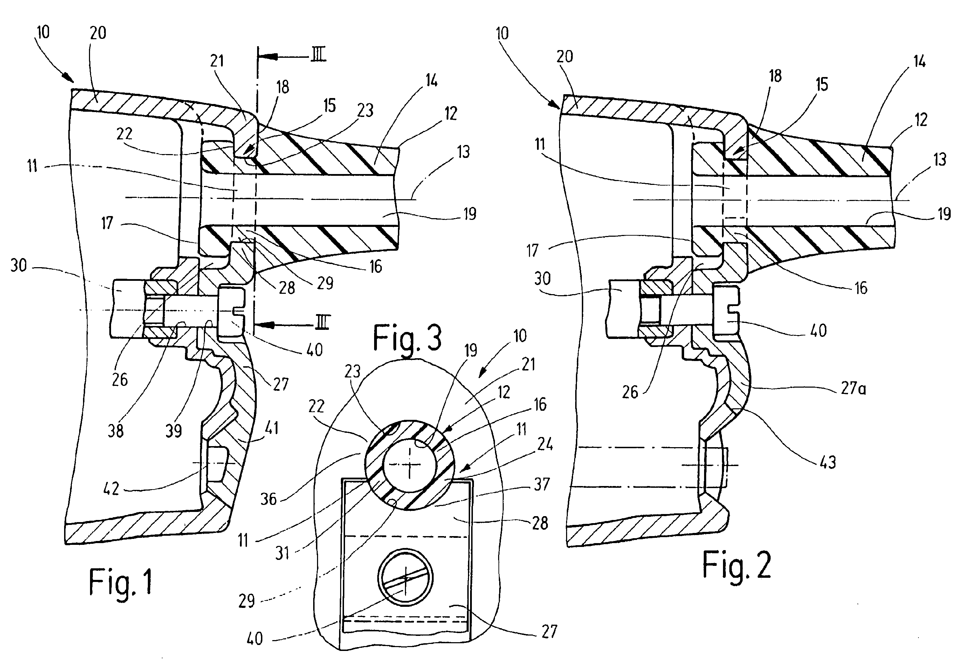

In Fig. 1, 2 und 4 ist ein Gehäuseteil 10 gezeigt, der z. B. Teil des Gehäuses eines Handgerätes, insbesondere eines elektrischen Handwerkzeuges, ist. Der Gehäuseteil 10 weist eine Aufnahme 11 für eine Kabeltülle 12 auf. Die Kabeltülle 12 ist herkömmlicher Art und in dieser Weise mit einem sich in Richtung der Längsachse 13 erstreckenden Schlauch 14 versehen, der am in den Zeichnungen sichtbaren Ende in einen Befestigungsabschnitt 15 übergeht. Dieser besteht aus einem mittleren Abschnitt 16 mit sich beidseitig daran anschließenden und den Abschnitt 16 in Querrichtung überragenden Abstützabschnitten 17 und 18. Die Kabeltülle 12 enthält eine durchlaufende Bohrung 19 zur Aufnahme und Durchführung einer nicht weiter gezeigten elektrischen Anschlußleitung. Der Abschnitt 16 ist hinsichtlich seiner Umfangskontur rund gestaltet, wobei auch ein eckiger oder anderer Querschnitt möglich sind. Die beiden Abstützabschnitte 17 und 18 beidseitig des Abschnitts 16 sind beim gezeigten Ausführungsbeispiel wie der Abschnitt 16 ringförmig, insbesondere kreisringförmig, ausgebildet.

Der Gehäuseteil 10 ist als etwa topfförmiger Gehäusedeckel 20 ausgebildet und weist eine den Topfboden bildende Stirnwand 21 auf. Der Gehäusedeckel 20 weist einen Wandteil 22 auf, der Teil der Stirnwand 21 ist und eine quer zur Längsachse 13 mit einer Öffnung 24 versehene Ausnehmung 23 enthält. Diese Stirnwand 21 ist im Anschluß an die Öffnung 24 der Ausnehmung 23 mit einem den Wandteil 22 und dessen Ausnehmung 23 innerhalb der Ebene des Wandteils 22 zu einer Seite hin öffnenden und freigebenden Rücksprung 25 versehen, der in Fig. 1 , 2 und 4 nach links weist und sich an die Öffnung 24 der Ausnehmung 23 anschließt. Der Rücksprung 25 bildet angrenzend an den Wandteil 22 einen Freiraum 26 zum Einsetzen der Kabeltülle 12 quer zu deren Längsachse 13 durch die Öffnung 24 in die Ausnehmung 23.

Am Gehäusedeckel 20 ist außen ein Anlegedeckel 27 anlegbar, der einen zweiten Wandteil 28 mit darin enthaltener zweiter Ausnehmung 29 zur Festlegung der Kabeltülle 12 aufweist und mit dem zweiten Wandteil 28 im Freiraum 26 aufnehmbar ist. Der Anlegdeckel 27 ist am Gehäusedeckel 20 lösbar befestigbar oder zusammen mit diesem an einem nur schematisch angedeutetem Gehäuseteil 30, z. B. Motorgehäuse od. dgl., befestigbar. In Anpassung an den ersten Wandteil 22 und dessen Ausnehmung 23 ist die zweite Ausnehmung 29 im zweiten Wandteil 28 quer zur Längsachse 13 unter Bildung einer Öffnung 31 geöffnet.

Prinzipiell sind der zweite Wandteil 28 und der erste Wandteil 22 so zusammensetzbar und verbindbar, daß sich die zweite Ausnehmung 29 und die erste Ausnehmung 23 zu einer umfangsseitig vorzugsweise im wesentlichen geschlossenen Öffnung ergänzen, in der der Abschnitt 16 der Kabeltülle 12 zumindest im wesentlichen formschlüssig aufnehmbar ist, wobei die Kabeltülle 12 mit dem Abschnitt 16 zwischen beiden Wandteilen 22 und 28 halterbar ist. Die beiden sich zu einer Öffnung ergänzenden Ausnehmungen 23 und 29 sind der Kontur des Abschnitts 16 der Kabeltülle 12 angepaßt. Bei der ringförmigen, insbesondere kreisringförmigen,Kontur des Abschnitts 16 beim gezeigten Ausführungsbeispiel sind somit die erste Ausnehmung 23 und die zweite Ausnehmung 29 jeweils bogenförmig, insbesondere kreisbogenabschnittförmig, und so geformt, daß sie dann, wenn die Wandteile 22 und 28 aneinandergesetzt sind, eine im wesentlicehn kreisförmige Öffnung ergeben.

Der erste Wandteil 22 mit Ausnehmung 23 ist einstückiger Bestandteil des Gehäusedeckels 20, insbesondere der Stirnwand 21.

Der Rücksprung 25, also der horizontal gemessene Abstand des ersten Wandteils 22 vom restlichen Teil der Stirnwand 21, entspricht mindestens der in Richtung der Längsachse 13 gemessenen Querschnittsdicke des endseitig angeordneten Abstützabschnitts 17 der Kabeltülle 12. Anders betrachetet bedeutet dies, daß der erste Wandteil 22 der Stirnwand 21 mit einem solchen Maß in Fig. 1, 2 und 4 in Richtung der Längsachse 13 nach rechts hin über den daran angrenzenden übrigen Bereich der Stirnwand 21 übersteht, das zumindest der axialen Querschnittsdicke des endseitigen Abstützabschnitts 17 der Kabeltülle 12 entspricht.

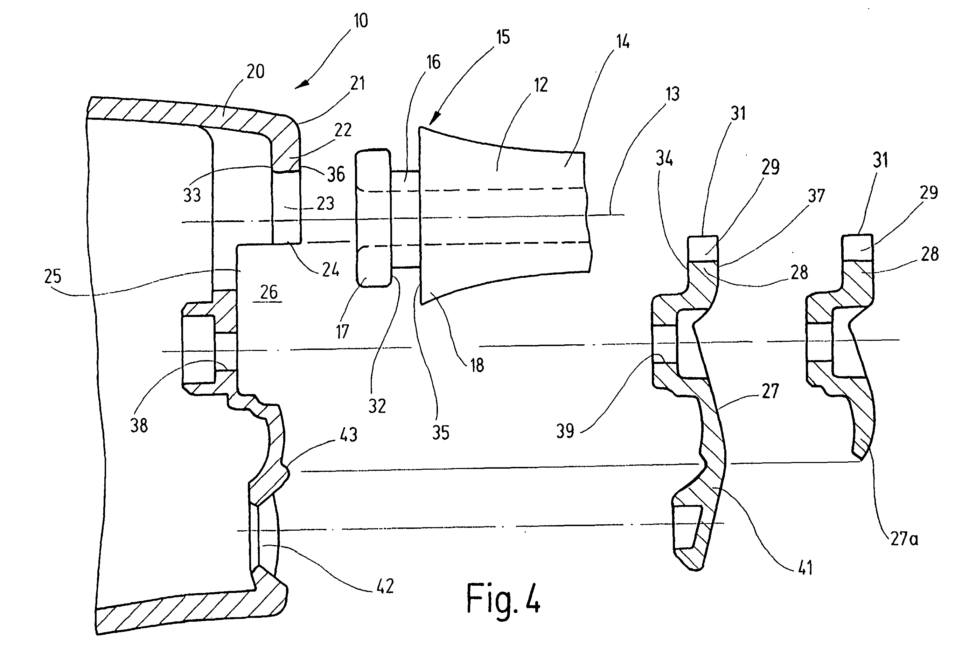

Die Ausnehmungstiefe einer der beiden Ausnehmungen 23, 29, beim gezeigten Ausführungsbeispiel, insbesondere die Ausnehmungstiefe der ersten Ausnehmung 23 im Wandteil 22, ist größer bemessen als diejenige der anderen Ausnehmung, d. h. der zweiten Ausnehmung 29. Beim gezeigten Ausführungsbeispiel ist die Ausnehmungstiefe der ersten Ausnehmung 23 beispielsweise so groß gewählt, daß die Ausnehmung 23 ein Aufnahmevermögen von mehr als 50 % des Umfangs des Abschnitts 16 der Kabeltülle 12 aufweist. Wie sich aus Fig. 3 ergibt, ist die Breite der Öffnung 24 der ersten Ausnehmung 23 geringer als der unverformte Außendurchmesser des Abschnitts 16 der Kabeltülle 12. Da die Kabeltülle 12 als Schlauch und dabei aus elastischem Material gestaltet ist, läßt sie sich quer zur Längsachse 13 zusammendrücken, auch im Bereich des Abschnitts 16, so daß dieser quer zu der Längsachse 13 von der Öffnung 24 her durch diese in die erste Ausnehmung 23 einsetzbar ist, wobei der endseitige Abstützabschnitt 17 durch eine entsprechende Öffnung in der Stirnwand 21 hindurch in das vom Gehäusedeckel 20 umschlossene Innere und so eingreifen kann, daß der Abstützabschnitt 17 mit einer Seite 32 an einer zugewandten, an die Ausnehmung 23 ringsum anschließenden Fläche 33 des Wandteils 22 unter axialer Lagesicherung der Kabeltülle 12 abstützbar ist.

Nach dem Einsetzen der Kabeltülle 12 mit dem Abschnitt 16 in die erste Ausnehmung 23 wird anschließend der Anlegdeckel 27 so in den Freiraum 26 eingelegt, daß der Abschnitt 16 der Kabeltülle 12 von der zweiten Ausnehmung 29 im Wandteil 28 ebenfalls aufgenommen wird und sich der endseitige Abstützabschnitt 17 mit der Seite 32 auch an einer zugewandten, an die Ausnehmung 29 ringsum anschließenden Fläche 34 des Wandteils 28 abstützbar ist. Die Kabeltülle 12 ist mit ihrem Befestigungsabschnitt 15 nunmehr im Gehäuseteil 10 sicher aufgenommen. Dabei stützt sich der andere Abstützabschnitt 18 der Kabeltülle 12 mit einer Seite 35 an zugewandten, an die Ausnehmungen 23 und 29 ringsum anschließenden Flächen 36 bzw. 37 beider Wandteile 22 bzw. 28 ebenfalls unter axialer Lagesicherung ab.

Die Stirnwand 21 ist im Bereich des Freiraumes 26 mit einer Bohrung 38 versehen. Auch der Anlegdeckel 27 ist mit einer entsprechenden Bohrung 39 versehen. Zur Befestigung dient eine Befestigungsschraube 40, die beide Bohrungen 38 und 39 durchgreift und die z. B. gemäß Fig. 1 in den Gehäuseteil 30, z. B. das Motorgehäuse, einschraubbar ist, so daß mittels der Befestigungsschraube 40 der Gehäuseteil 10 zusammen mit dem Anlegdeckel 27 befestigt werden.

Es versteht sich, daß bei einem anderen, nicht gezeigten Ausführungsbeispiel mittels der Befestigungsschraube 40 oder in anderer Weise statt dessen der Anlegdeckel 27 am Gehäusedeckel 20 lösbar befestigbar ist.

Beim ersten Ausführungsbeispiel gemäß Fig. 1 weist der Anlegdeckel 27 in Abstand von seinem Wandteil 28, der die Ausnehmung 29 enthält, einen damit vorzugsweise einstückigen Blinddeckel 41 auf, der zur Abdeckung einer Durchlaßöffnung 42 in der Stirnwand 21 des Gehäusedeckels 20 dient.

Beim zweiten Ausführungsbeispiel gemäß Fig. 2 ist der Anlegdeckel 27a derart modifiziert, daß er diesen Blinddeckel 41 nicht aufweist sondern kürzer ist derart, daß der Anlegdeckel 27a in Fig. 1 unten an einer vorspringenden Stufe 43 der Stirnwand 21 anliegt und endet. Die Durchlaßöffnung 42 in der Stirnwand 21 ist dabei offen, so daß in diesem Fall der ansonsten gleich gestaltete Gehäuseteil 10 nun zum Abschluß einer Baueinheit verwendet werden kann, die eine Elektronik mit Stellrad enthält, das im Bereich der Durchlaßöffnung 42 sitzt und von außen zu Stellzwecken erreichbar ist. Für die Variante ohne diese Elektronik mit Stellrad wird der Anlegdeckel 27 gemäß Fig. 1. eingesetzt. Im einen wie im anderen Fall ist im übrigen der Gehäuseteil 10 jeweils der gleiche, so daß sich eine flexiblere Baureihengestaltung durch Einsatz entweder des Anlegdeckels 27 oder des Anlegdeckels 27a ergibt. Durch diese flexiblere Baureihengestaltung der beiden genannten Varianten ist eine Kostenersparnis durch Reduzierung der Bauteile und des Lagerhaltungsplatzbedarfs erreicht.

Der Gehäuseteil 10, insbesondere der Gehäusedeckel 20, ist in Topfbauweise gestaltet, wobei auch für diese Gestaltung durch die beschriebenen Besonderheiten die gezeigte Kabeltülle 12 mit mittlerem Abschnitt 16 und beidseitigen Abstützabschnitten 17 und 18 verwendet werden kann. Dies ermöglicht den Einsatz eines kostengünstigen elektrischen Anschlußkabels. Dadurch, daß die Kabeltülle 12 mittels der beiden Abstützabschnitte 17 und 18 beidseitig sicher am Gehäuseteil 10 abgestützt ist, ist die Gefahr von Kabelbrüchen der hindurchgeführten elektrischen Anschlußleitung reduziert. Der in Topfbauweise gestaltete Gehäusedeckel 20 ist in dieser Form kostengünstig herstellbar als ein einziges, einstückiges Bauteil, wobei dennoch in beschriebener Weise die Kabeltülle 12 gezeigter Art schnell und einfach angebracht werden kann.

## Patentansprüche

1. Gehäuseteil mit einer Aufnahme (11) für eine Kabeltülle (12), insbesondere eines elektrischen Handgerätes, z. B. eines elektrischen Handwerkzeuges, bei dem ein erster Wandteil (22) mit einer ersten Ausnehmung (23) und ein zweiter Wandteil (28) mit einer zweiten Ausnehmung (29) so zusammengesetzt und verbunden sind, daß sich die erste Ausnehmung (23) und die zweite Ausnehmung (29) zu einer umfangsseitig vorzugsweise im wesentlichen geschlossenen Öffnung ergänzen, in der ein mit seiner Außenkontur der Kontur dieser Öffnung angepaßter Abschnitt (16) der Kabeltülle (12) zumindest im wesentlichen formschlüssig aufgenommen ist, der zwischen beiden Wandteilen (22 und 28) gehalten ist, wobei beidseitig an den Abschnitt (16) anschließende und diesen in Querrichtung überragende Abstützabschnitte (17 und 18) der Kabeltülle (12) mit ihren dem Abschnitt (16) jeweils zugewandten Seiten (32, 35) an zugewandten, an die Öffnung anschließenden Flächen (33, 34, 36, 37) beider Wandteile (22, 28) unter axialer Lagesicherung der Kabeltülle (12) abgestützt sind, **gekennzeichnet durch** einen etwa topfförmigen Gehäusedeckel (20) mit den Topfboden bildender Stirnwand (21), die den ersten Wandteil (22) mit dessen erster Ausnehmung (23) und ferner einen den ersten Wandteil (22) freistellenden und dessen erste Ausnehmung (23) innerhalb der Ebene des ersten Wandteils (22) zu einer Seite öffnenden und freigebenden Rücksprung (25) aufweist, der angrenzend an den ersten Wandteil (22) einen Freiraum (26) zum Einsetzen der Kabeltülle (12) quer zu deren Längsachse (13) in die erste Ausnehmung (23) bildet, und **durch** einen am Gehäusedeckel (20) außen angelegten und mit diesem lösbar verbundenen Anlegdeckel (27; 27a), der den zweiten Wandteil (28) mit dessen zweiter Ausnehmung (29) aufweist und mit diesem im Freiraum (26) aufgenommen ist.

2. Gehäuseteil nach Anspruch 1, **dadurch gekennzeichnet, daß** der erste Wandteil (22) einstückiger Teil des Gehäusedeckels (20), insbesondere der Stirnwand (21) des Gehäusedeckels (20), ist.

3. Gehäuseteil nach Anspruch 1 oder 2, **dadurch gekennzeichnet, daß** die erste Ausnehmung (23) und die zweite Ausnehmung (29) jeweils bogenförmig, insbesondere kreisbogenabschnittförmig, ausgebildet sind.

4. Gehäuseteil nach einem der Ansprüche 1 bis 3, **dadurch gekennzeichnet, daß** der Abschnitt (16) und/oder die Abstützabschnitte (17, 18) der Kabeltülle (12) jeweils ringförmig, insbesondere kreisringförmig, ausgebildet sind.

5. Gehäuseteil nach einem der Ansprüche 1 bis 4, **dadurch gekennzeichnet, daß** die Größe des Rücksprungs (25) der Stirnwand (21), in Richtung der Längsachse (13) der Kabeltülle (12) betrachtet, mindestens der axialen Querschnittsdicke des endseitigen Abstützabschnitts (17) der Kabeltülle (12) entspricht.

6. Gehäuseteil nach einem der Ansprüche 1 bis 5, **dadurch gekennzeichnet, daß** der erste Wandteil (22) der Stirnwand (21), in Richtung der Längsachse (13) der Kabeltülle (12) betrachtet, mit einem solchen Maß über den daran angrenzenden Bereich der Stirnwand (21) übersteht, das zumindest der axialen Querschnittsdicke des endseitigen Abstützabschnitts (17) der Kabeltülle (12) entspricht.

7. Gehäuseteil nach einem der Ansprüche 1 bis 6, **dadurch gekennzeichnet, daß** die Ausnehmungstiefe einer Ausnehmung (23, 29), insbesondere der ersten Ausnehmung (23), größer bemessen ist als die Ausnehmungstiefe der anderen Ausnehmung, insbesondere der zweiten Ausnehmung (29).

8. Gehäuseteil nach Anspruch 7, **dadurch gekennzeichnet, daß** die Ausnehmungstiefe einer Ausnehmung (23, 29), insbesondere der ersten Ausnehmung (23), so groß gewählt ist, daß diese ein Aufnahmevermögen von mehr als 50 % des Umfangs des Abschnitts (16) der Kabeltülle (12) aufweist.

9. Gehäuseteil nach einem der Absprüche 1 bis 8, **dadurch gekennzeichnet, daß** die Stirnwand (21) im Bereich des Freiraumes (26) sowie der Anlegdeckel (27;27a) jeweils eine Bohrung (38, 39) zum Durchgriff einer Befestigungsschraube (40) aufweisen, mittels der der Anlegdeckel (27; 27a) an der Stirnwand (21) oder der Anlegdeckel (27; 27a) und der Gehäusedeckel (20) gemeinsam an einem anderen Gehäuseteil (30), z. B. einem Motorgehäuse, befestigbar sind.

10. Gehäuseteil nach einem der Ansprüche 1 bis 9, **dadurch gekennzeichnet, daß** der Anlegdeckel (27) in Abstand von seinem die zweite Ausnehmung (29) enthaltenden Wandteil (28) mit einem damit vorzugsweise einstückigen Blinddeckel (41) zur Abdeckung einer Durchlaßöffnung (42) in der Stirnwand (21) des Gehäusedeckels (20) versehen ist oder als andere Ausführungsform (17a) ohne Blinddeckel ausgebildet ist.

## Claims

1. Housing part having a receiving device (11) for a cable bushing (12), in particular of a handheld electrical appliance, for example of a handheld electrical tool, in which housing part a first wall part (22) with a first recess (23) and a second wall part (28) with a second recess (29) are combined and connected such that the first recess (23) and the second recess (29) complete one another to form an opening whose circumference is preferably substantially closed and in which a section (16) of the cable bushing (12), whose outer contour is matched to the contour of this opening, is received in an at least substantially interlocking manner and is held between the two wall parts (22 and 28), with support sections (17 and 18) of the cable bushing (12), which adjoin both sides of the section (16) and project beyond the latter in the transverse direction, being supported with their sides (32, 35), which each face the section (16), on opposing surfaces (33, 34, 36, 37) of the two wall parts (22, 28) which adjoin the opening, with the position of the cable bushing (12) being secured axially, **characterized by** an approximately pot-shaped housing cover (20) with an end wall (21) which forms the base of the pot and has the first wall part (22) with its first recess (23) and also a clearance (25) which exposes the first wall part (22), opens and exposes its first recess (23) in the plane of the first wall part (22) on one side, and, adjoining the first wall part (22), forms a free space (26) for inserting the cable bushing (12) into the first recess (23) transverse to its longitudinal axis (13), and by an application cover (27; 27a) which is applied to the outside of the housing cover (20), is detachably connected to the latter, has the second wall part (28) with its second recess (29), and is received with the said wall part in the free space (26).

2. Housing part according to Claim 1, **characterized in that** the first wall part (22) is an integral part of the housing cover (20), in particular the end wall (21) of the housing cover (20).

3. Housing part according to Claim 1 or 2, **characterized in that** the first recess (23) and the second recess (29) are each in the form of an arc, in particular in the form of a section of an arc of a circle.

4. Housing part according to one of Claims 1 to 3, **characterized in that** the section (16) and/or the support sections (17, 18) of the cable bushing (12) are each in the form of a ring, in particular in the form of a circular ring.

5. Housing part according to one of Claims 1 to 4, **characterized in that** the size of the clearance (25) in the end wall (21), as viewed in the direction of the longitudinal axis (13) of the cable bushing (12), corresponds at least to the axial cross-sectional thickness of the end support section (17) of the cable bushing (12).

6. Housing part according to one of Claims 1 to 5, **characterized in that** the first wall part (22) of the end wall (21), as viewed in the direction of the longitudinal axis (13) of the cable bushing (12), projects beyond the region of the end wall (21) which adjoins the said wall part to an extent which corresponds at least to the axial cross-sectional thickness of the end support section (17) of the cable bushing (12).

7. Housing part according to one of Claims 1 to 6, **characterized in that** the depth of one recess (23, 29), in particular of the first recess (23), is greater than the depth of the other recess, in particular of the second recess (29).

8. Housing part according to Claim 7, **characterized in that** the depth of one recess (23, 29), in particular of the first recess (23), is chosen such that the said recess is able to receive more than 50% of the circumference of the section (16) of the cable bushing (12).

9. Housing part according to one of Claims 1 to 8, **characterized in that** the end wall (21), in the region of the free space (26), and the application cover (27; 27a) each have a hole (38, 39) for a fastening screw (40) to engage through, it been possible to use the said fastening screw to attach the application cover (27; 27a) to the end wall (21), or to jointly attach the application cover (27; 27a) and the housing cover (20) to another housing part (30), for example a motor housing.

10. Housing part according to one of Claims 1 to 9, **characterized in that**, at a distance from its wall part (28) which contains the second recess (29), the application cover (27) is provided with a preferably integral blind cover (41) for covering a passage opening (42) in the end wall (21) of the housing cover (20), or is in the form of another embodiment (27a) without a blind cover.

## Revendications

1. Partie de boîtier avec un logement (11) pour un manchon de câble (12), en particulier d'un appareil portatif électrique, par exemple un outil portatif électrique,
dans laquelle une première partie de paroi (22) comportant un premier évidement (23) et une seconde partie de paroi (28) comportant un second évidement (29) sont montées et reliées de telle manière que le premier évidement (23) et le second évidement (29) se complètent pour former une ouverture, de préférence essentiellement fermée sur son périmètre, dans laquelle est logée, au moins essentiellement par complémentarité de forme un segment (16) du manchon de câble (12) dont le contour extérieur est adapté au contour de cette ouverture et qui est maintenu entre les deux parties de paroi (22 et 28),
des segments d'appui (17 et 18) du manchon de câble, se raccordant sur les deux côtés au segment (16) et le dépassant en direction transversale s'appuient, avec leurs côtés (32, 35) orientés chacun vers le segment (16), sur des surfaces (33, 34, 36, 37) orientées vers lui et se raccordant à l'ouverture, des deux parties de paroi (22, 28) tout en fixant la position axiale du manchon de câble (12),
**caractérisée par**
un couvercle de boîtier (20) à peu près en forme de pot, comprenant une paroi frontale (21) qui forme le fond du pot et qui comprend la première partie de paroi (22) avec le premier évidement correspondant (23) et en outre un retrait (25) dégageant la première partie de paroi (22) et ouvrant et dégageant vers un côté le premier évidement correspondant (23) à l'intérieur du plan de la première partie de paroi (22), lequel retrait forme une zone de dégagement (26), avoisinant la première partie de paroi (22), afin d'insérer le manchon de câble (12) perpendiculairement à son axe longitudinal (13) dans le premier évidement (23), et
un couvercle de contact (27, 27a) posé à l'extérieur contre le couvercle de boîtier (20) et qui, relié à celui-ci de manière détachable, comprend la seconde partie de paroi (28) avec le second évidement correspondant (29) et est logé avec celle-ci dans la zone de dégagement (26).

2. Partie de boîtier selon la revendication 1,
**caractérisée en ce que**
la première partie de paroi (22) est une partie, faite d'une seule pièce, du couvercle de boîtier (20), en particulier de la paroi frontale (21) du couvercle de boîtier (20).

3. Partie de boîtier selon la revendication 1 ou 2, **caractérisée en ce que**
le premier évidement (23) et le second évidement (29) sont configurés chacun en forme d'arc, en particulier en forme de segment d'arc de cercle.

4. Partie de boîtier selon l'une quelconque des revendications 1 à 3,
**caractérisée en ce que**
le segment (16) et/ou les segments d'appui (17, 18) du manchon de câble (12) sont configurés chacun en forme d'anneau et plus particulièrement d'anneau de cercle.

5. Partie de boîtier selon l'une quelconque des revendications 1 à 4,
**caractérisée en ce que**
la dimension du retrait (25) de la paroi frontale (21), observé dans la direction de l'axe longitudinal (13) du manchon de câble (12), correspond au moins à l'épaisseur axiale en coupe transversale du segment d'appui terminal (17) du manchon de câble (12).

6. Partie de boîtier selon une des revendications 1 à 5,
**caractérisée en ce que**
la première partie de paroi (22) de la paroi frontale (21), observée dans la direction de l'axe longitudinal (13) du manchon de câble (12), dépasse la zone limitrophe de la paroi frontale (21) d'une longueur qui correspond au moins à l'épaisseur axiale en coupe transversale du segment d'appui terminal (17) du manchon de câble (12).

7. Partie de boîtier selon une des revendications 1 à 6,
**caractérisée en ce que**
la profondeur d'un évidement (23, 29), en particulier du premier évidement (23), est supérieure à la profondeur de l'autre évidement, en particulier du second évidement (29).

8. Partie de boîtier selon une des revendications 1 à 7,
**caractérisée en ce que**
la profondeur d'un évidement (23, 29), en particulier du premier évidement (23), est choisie pour être suffisamment grande pour que celui-ci présente une capacité de logement supérieure à 50 % du périmètre du segment (16) du manchon de câble (12).

9. Partie de boîtier selon une des revendications 1 à 8,
**caractérisée en ce que**
la paroi frontale (21) à proximité de la zone de dégagement (26), ainsi que le couvercle de contact (27 ; 27a) présentent chacun un perçage (38, 39) pour le passage d'une vis de fixation (40) permettant de fixer le couvercle de contact (27 ; 27a) sur la paroi frontale (21), ou bien le couvercle de contact (27 ; 27a) et le couvercle de boîtier (20) conjointement sur une autre partie de boîtier (30), par exemple sur une carcasse de moteur.

10. Partie de boîtier selon une des revendications 1 à 9,
**caractérisée en ce que**
le couvercle de contact (27) est pourvu, à une certaine distance de sa partie de paroi (28) contenant le second évidement (29), d'un cache (41), de préférence fait d'une seule pièce avec lui, afin de recouvrir une ouverture de passage (42) dans la paroi frontale (21) du couvercle de boîtier (20), ou bien est configuré sous un autre mode de réalisation (27a) sans cache.
